# FASCICULE DE BREVET EUROPEEN

(11) **EP 0 571 284 B1**
(45) Date de publication et mention de la délivrance du brevet: **27.09.1995**
(21) Numéro de dépôt: 93401293.1
(22) Date de dépôt: 19.05.1993
(51) Int. Cl.: F02F 11/00, F16J 15/32

(54) **Dispositif d'étanchéité d'arbre de moteur à combustion interne, en particulier de véhicule automobile**
Kurbelwellendichtung für eine Verbrennungskraftmaschine, besonders für Fahrzeug
Crankshaft seal for an internal combustion engine, particularly for vehicle

(30) Priorité: 20.05.1992 FR 9206118
(43) Date de publication de la demande: 24.11.1993
(73) Titulaire: PROCAL, Société anonyme dite, 52200 Langres (FR)
(72) Inventeur: Gazet, Hervé, F-69006 Lyon (FR); Devouassoux, Serge, F-52200 Langres (FR); Saxod, Michel, F-52200 Langres (FR)
(74) Mandataire: Leszczynski, André

(56) Documents cités:
- DE-C- 3 305 765
- FR-A- 2 419 655
- US-A- 3 612 547

## Description

La présente invention est relative à un dispositif d'étanchéité d'arbre de moteur à combustion interne, en particulier de véhicule automobile.

On assure traditionnellement l'étanchéité d'un arbre de moteur à combustion interne tournant dans le carter du moteur par l'intermédiaire de bagues d'étanchéité, emmanchées à force dans un alésage du carter, et comportant intérieurement une garniture d'étanchéité pourvue d'au moins une lèvre assurant une étanchéité dynamique vis-à-vis de l'arbre en rotation.

Il a déjà été proposé de compléter l'étanchéité au moyen de couvercles en un métal léger, tel qu'un alliage d'aluminium, comportant un évidement intérieur pour le passage de l'arbre, engagés autour de celui-ci et en appui par une face frontale, généralement pourvue d'un joint d'étanchéité, contre la face extérieure du carter.

Il a également été proposé d'associer les deux pièces mentionnées ci-dessus en prévoyant dans la face frontale du couvercle un évidement apte à loger la bague d'étanchéité dynamique, ou encore de réaliser une garniture d'étanchéité dynamique directement sur le couvercle.

Enfin EP-A-0513438, document de brevet antérieur, mais publié postérieurement au dépôt de la présente demande, décrit un dispositif d'étanchéité d'arbre de moteur comprenant une armature annulaire en tôle métallique, notamment en acier, présentant, de part et d'autre d'une portée axiale, une première portée radiale dirigée vers l'intérieur, à l'extrémité de laquelle est fixée une garniture d'étanchéité pourvue d'au moins une lèvre apte à venir au contact de l'arbre du moteur, et une seconde portée radiale, dirigée vers l'extérieur, à l'extrémité de laquelle est réalisée un bourrelet d'étanchéité apte à être écrasé contre la paroi extérieure du carter du moteur, et un couvercle, en un métal léger, tel qu'un alliage d'aluminium, comportant un évidement central annulaire et, à sa périphérie, des moyens pour sa fixation sur la paroi du carter, ledit couvercle étant solidarisé par collage de la seconde portée radiale de ladite armature.

La présente invention se propose de réaliser un dispositif qui, tout en offrant les qualités d'étanchéité du dispositif connu selon EP-A-0513438, est d'une mise en oeuvre plus simple sur le plan de la fabrication, assure en outre une fonction d'étanchéité fiable au niveau de la cuvette d'huile constituant la partie inférieure du carter, et est plus facilement recyclable après démontage.

Selon l'invention, la solidarisation du couvercle avec l'armature est réalisée par sertissage avec engagement à ajustement serré de bossages, faisant saillie vers l'arrière de la seconde portée radiale de l'armature, dans des trous prévus à cet effet dans la face frontale du couvercle.

Les bossages et les trous correspondants présentent avantageusement une forme en contre-dépouille et de préférence une forme tronconique de diamètre croissant vers l'arrière du dispositif.

Le nombre et la disposition des bossages et des trous correspondants peuvent être quelconques. Dans un mode particulier de réalisation, il est prévu deux bossages et deux trous correspondants au voisinage de la partie inférieure du dispositif.

Avantageusement, le dispositif comporte un bord inférieur rectiligne destiné à être disposé sensiblement au niveau de la zone de séparation entre la partie supérieure du carter et la partie inférieure formant cuvette d'huile, le bourrelet d'étanchéité du dispositif comportant une partie rectiligne réalisée le long de ce bord inférieur rectiligne et dépassant vers le bas du dispositif au-delà dudit bord inférieur rectiligne de celui-ci.

Le bourrelet d'étanchéité, réalisé de préférence en élastomère, en saillie de la face frontale de l'armature, se trouve écrasé contre la face extérieure de la paroi du carter lors du serrage d'éléments de fixation, tels que des vis, engagés dans des trous correspondants ménagés à la périphérie du couvercle. On assure ainsi une étanchéité statique particulièrement fiable entre le couvercle et le carter, en particulier vis-à-vis de l'élément de carter inférieur.

Simultanément, la garniture d'étanchéité, également en élastomère, prévue à l'extrémité de la première portée radiale de l'armature assure une étanchéité dynamique vis-à-vis de l'arbre en rotation dans le carter.

La mise en place du dispositif est particulièrement simple dans la mesure où il n'est plus nécessaire d'emmancher à force une bague d'étanchéité dans un alésage du carter.

Il suffit, comme indiqué ci-dessus, d'appliquer le dispositif contre la face extérieure de la paroi du carter et de serrer les éléments de fixation prévus à cet effet.

Le démontage du dispositif s'effectue également de manière simple par simple déserrage des éléments de fixation.

Le dispositif peut alors être facilement recyclé en séparant le couvercle de l'armature.

Dans le but de mieux faire comprendre l'invention on va maintenant en décrire à titre d'exemple nullement limitatif un mode de réalisation préféré en référence au dessin annexé dans lequel :
- la figure 1 est une vue en élévation frontale d'un dispositif d'étanchéité selon l'invention,
- la figure 2 est une vue en coupe selon II-II de la figure 1,
- la figure 3 est une vue en coupe selon III-III de la figure 1, et
- la figure 4 est une vue en coupe selon IV-IV de la figure 1.

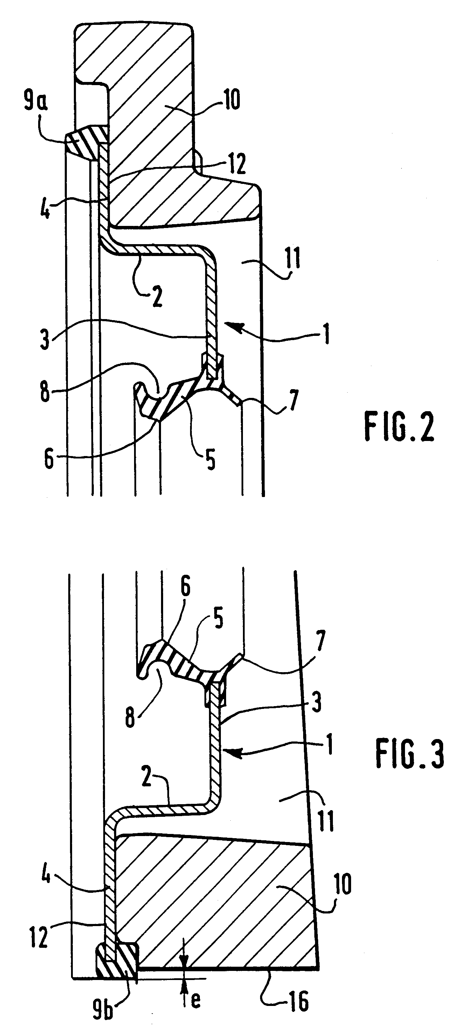

Le dispositif selon l'invention comporte une armature métallique, notamment en tôle d'acier, désignée globalement par 1, constituée comme on le voit le mieux sur les figures 2 et 3, par une portée annulaire axiale 2 prolongée d'un seul tenant de part et d'autre, d'une part par une portée radiale 3 dirigée vers l'intérieur, et d'autre part par une portée radiale 4 dirigée vers l'extérieur.

A l'extrémité de la portée radiale 3, dirigée vers l'intérieur, est surmoulée, une garniture d'étanchéité en élastomère 5 comprenant une lèvre principale 6 pourvue d'une arête d'étanchéité et une lèvre secondaire anti-poussière 7.

L'arête de la lèvre principale 6 est destinée à venir en appui contre l'arbre rotatif (non représenté) du moteur. L'appui sur l'arbre est assuré, de manière conventionnelle par un ressort-jarretière, non représenté, logé dans un évidement 8 de garniture 5.

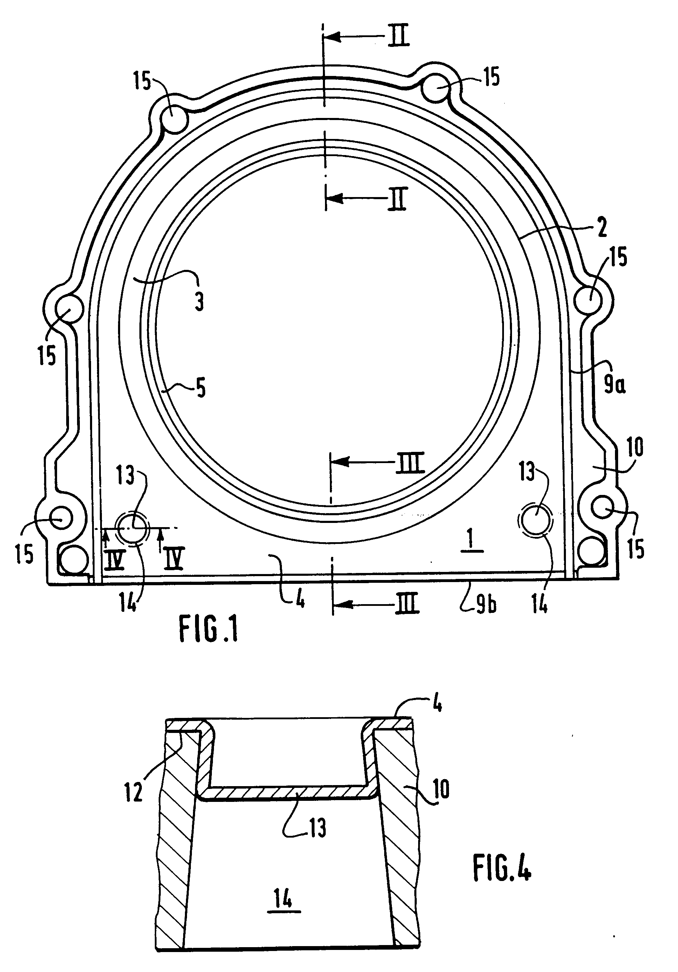

A l'extrémité de la seconde portée radiale 4 de l'armature 1, est surmoulé un bourrelet d'étanchéité en élastomère qui comporte une partie 9a présentant une forme circulaire prolongée par deux parties droites, comme on le voit le mieux sur la figure 1, et une partie rectiligne 9b s'étendant le long du bord inférieur du dispositif. Le bourrelet 9a, 9b fait saillie vers l'avant (vers la gauche sur les figures 2 et 3) de la face frontale de la portée radiale 4 de l'armature.

Le dispositif comporte en outre un couvercle 10 en métal léger, notamment en alliage d'aluminium, de dimensions extérieures plus grandes que l'armature 1, ledit couvercle comportant un évidement central annulaire 11 logeant les branches 2 et 3 de l'armature et la garniture d'étanchéité dynamique 5, comme on le voit le mieux sur les figures 2 et 3.

Le couvercle 10 comporte une face frontale 12 contre laquelle vient s'appliquer la face arrière de la seconde portée radiale 4 de l'armature 1. La solidarisation de la portée 4 avec l'armature 10 s'effectue, comme on le voit le mieux sur la figure 4, à l'aide de bossages 13 enfoncés à ajustement serré dans des trous 14 débouchant dans la face frontale 12 du couvercle 10.

Dans l'exemple de réalisation illustré, il est prévu deux bossages 13 et deux trous correspondants 14 réalisés au voisinage de la partie inférieure du dispositif.

De façon à assurer une meilleure solidarisation de l'armature par rapport au couvercle, les bossages 13 et les trous 14 présentent une forme en contre-dépouille, par exemple une forme tronconique s'élargissant en direction de l'arrière du dispositif.

Pour la fixation du dispositif sur la paroi extérieure d'un carter de moteur, le couvercle 10 comporte à sa périphérie une pluralité de trous 15 permettant le passage de vis de fixation, non représentées.

Comme on le voit sur la figure 3, la partie inférieure rectiligne 9b du bourrelet d'étanchéité dépasse vers le bas du bord inférieur 16 du couvercle 10 d'une distance e, de par exemple 0,3 mm, de telle sorte que la partie 9b du bourrelet assure simultanément l'étanchéité vis-à-vis de la paroi extérieure de la partie inférieure du carter inférieur du moteur constituant la cuvette d'huile.

Pour la clarté du dessin, le carter du moteur n'est pas illustré et se trouve, en regardant les figures 2 et 3, sur la gauche du dessin.

Le dispositif illustré est facilement mis en place d'un seul tenant sur la paroi extérieure du carter par engagement de vis de fixation dans les trous 15 du couvercle 10 prévus de manière à être alignés avec des trous correspondants ménagés dans la paroi du carter.

Le démontage s'effectue également très simplement par simple dégagement des éléments de fixation.

Pour un éventuel recyclage des composants du dispositif après démontage, il suffit de dégager les bossages 13 de l'armature des trous correspondants 14 du couvercle, par exemple en appliquant des chocs sur l'armature de manière à séparer les deux pièces et récupérer les composants en matériaux différents.

## Revendications

1. Dispositif d'étanchéité d'arbre de moteur à combustion interne, en particulier de véhicule automobile, comprenant une armature annulaire en tôle métallique (1), notamment en acier, présentant, de part et d'autre d'une portée axiale (2) une première portée radiale (3) dirigée vers l'intérieur, à l'extrémité de laquelle est fixée une garniture d'étanchéité (5) pourvue d'au moins une lèvre (6) apte à venir au contact de l'arbre du moteur, et une seconde portée radiale (4), dirigée vers l'extérieur, à l'extrémité de laquelle est réalisé un bourrelet d'étanchéité (9a,9b) apte à être écrasé contre la paroi extérieure du carter du moteur, et un couvercle (10) en un métal léger, tel qu'un alliage d'aluminium, comportant un évidement central annulaire (11) et, à sa périphérie, des moyens (15) pour sa fixation sur la paroi du carter, ledit couvercle (10) étant solidarisé de la seconde portée radiale (4) de ladite armature (1), par sertissage avec engagement à ajustement serré de bossages (13), faisant saillie vers l'arrière de la seconde portée radiale (4) de l'armature (1) dans des trous (14) prévus dans la face frontale (12) du couvercle (10).

2. Dispositif selon la revendication 1, caractérisé par le fait que les bossages (13) et les trous correspondants (14) présentent une forme en contre-dépouille, et de préférence une forme tronconique de diamètre croissant vers l'arrière du dispositif.

3. Dispositif selon l'une quelconque des revendications 1 et 2, caractérisé par le fait qu'il comprend deux bossages (13) et deux trous (14) correspondants disposés au voisinage de sa partie inférieure.

4. Dispositif selon l'une quelconque des revendications précédentes, comportant un bord inférieur rectiligne, le long duquel s'étend une partie rectiligne du bourrelet d'étanchéité, caractérisé par le fait que ladite partie rectiligne (9b) du bourrelet dépasse vers le bas du dispositif au-delà dudit bord inférieur rectiligne (16) de celui-ci.

5. Dispositif selon l'une quelconque des revendications précédentes, caractérisé par le fait que ladite garniture d'étanchéité (5) et ledit bourrelet d'étanchéité (9a,9b) sont réalisés en élastomère.

6. Dispositif selon l'une quelconque des revendications précédentes, caractérisé par le fait que les moyens pour la fixation du couvercle sur la paroi du carter comportent une pluralité de trous (15) disposés à la périphérie du couvercle (10), destinés au passage d'organes de fixation, tels que des vis, aptes à s'engager dans des trous correspondants ménagés dans la paroi du carter.

## Claims

1. Sealing device for crankshaft of an internal combustion engine, in particular for motor vehicle, comprising an annular reinforcement of metal sheet (1), notably of steel, having, on either side of an axial zone (2), a first, inwardly directed radial zone (3), to the end of which is fixed a seal (5) provided with at least one lip (6) adapted for coming into contact with the crankshaft, and a second, outwardly directed radial zone (4), at the end of which is realized a sealing beading (9a, 9b) adapted to be squeezed against the outer wall of the engine casing, and a cover (10) of a light metal, such as an aluminium alloy, comprising an annular central aperture (11) and, at its periphery, means (15) for fixing it to the wall of the casing, said cover (10) being firmly connected to the second radial zone (4) of said reinforcement (1) by crimping with tightened adjustment engagement of bosses (13) projecting towards the rear of the second radial zone (4) of the reinforcement (1) through holds (14) provided in the front face (12) of the cover (10).

2. Device according to Claim 1, characterized by the fact that the bosses (13) and the corresponding holes (14) have an undercut shape, and preferably a truncated conical form of increasing diameter towards the rear of the device.

3. Device according to any one of Claims 1 and 2, characterized by the fact that it comprises two bosses (13) and two corresponding holes (14), disposed in the vicinity of its lower part.

4. Device according to any one of the preceding Claims, comprising a rectilinear lower edge, along which extends a rectilinear portion of the sealing beading, characterized by the fact that said rectilinear portion (9b) of the beading projects past the device downwards beyond said rectilinear lower edge (16) of the device.

5. Device according to any one of the preceding Claims, characterized by the fact that said seal (5) and said sealing beading (9a, 9b) are made of elastomer.

6. Device according to any one of the preceding Claims, characterized by the fact that the means for fixing the cover to the wall of the casing comprise a plurality of holes (15) disposed at the periphery of the cover (10), and intended for the passage of fixing elements, such as screws, adapted for engaging into corresponding holes formed in the wall of the casing.

## Patentansprüche

1. Kurbelwellendichtung für eine Brennkraftmaschine, insbesondere für ein Kraftfahrzeug, mit einer ringförmigen Bewehrung aus einem Metallblech (1), insbesondere einem solchen aus Stahl, die zu den beiden Seiten einer axialen Stützfläche (2) eine erste, nach innen gerichtete radiale Stützfläche (3), an deren Ende ein Dichtungsbesatz (5) befestigt ist, der mit mindestens einer Lippe (6) versehen ist, die in Kontakt mit der Kurbelwelle treten kann, und eine zweite, nach außen gerichtete radiale Stützfläche (4) aufweist, an deren Ende ein Dichtungswulst (9a, 9b) ausgebildet ist, der gegen die Außenwand des Motorgehäuses gedrückt werden kann, und mit einer Abdeckung (10) aus Leichtmetall wie einer Aluminiumlegierung, die eine zentrale, ringförmige Ausnehmung (11) und an ihrem Umfang Einrichtungen (15) zu ihrer Befestigung an der Gehäusewand aufweist, wobei die genannte Abdeckung (10) mit der zweiten radialen Stützfläche (4) der genannten Bewehrung (1) durch Verklemmen verbunden ist, mit einem klemmenden Einstelleingriff von Vorsprüngen (13), die zur Rückseite der zweiten radialen Stützfläche (4) der Bewehrung (1) vorspringen, in Löcher (14), die in der Vorderfläche (12) der Abdeckung (10) ausgebildet sind.

2. Vorrichtung nach Anspruch 1, **dadurch gekennzeichnet,** daß die Vorsprünge (13) und die zugehörigen Löcher (14) hinterschnittene Form aufweisen, vorzugsweise Kegelstumpfform, mit einem zur Rückseite der Vorrichtung zunehmenden Durchmesser.

3. Vorrichtung nach einem der Ansprüche 1 oder 2, **dadurch gekennzeichnet,** daß sie zwei Vorsprünge (13) und zwei zugehörige Löcher (14) aufweist, die nahe ihrem unteren Teil angeordnet sind.

4. Vorrichtung nach einem der vorstehenden Ansprüche, mit einem geradlinigen Unterrand, dem entlang sich ein geradliniger Teil des Dichtungswulsts erstreckt, **dadurch gekennzeichnet,** daß der geradlinige Teil (9b) des Wulsts zur Unterseite der Vorrichtung hin über den genannten geradlinigen Unterrand (16) derselben hinausgeht.

5. Vorrichtung nach einem der vorstehenden Ansprüche, **dadurch gekennzeichnet,** daß der genannte Dichtungsbesatz (5) und der genannte Dichtungswulst (9a, 9b) aus einem Elastomer bestehen.

6. Vorrichtung nach einem der vorstehenden Ansprüche, **dadurch gekennzeichnet,** daß die Einrichtungen zum Befestigen der Abdeckung an der Gehäusewand mehrere Löcher (15) aufweisen, die am Umfang der Abdeckung (10) vorhanden sind und zum Durchtreten von Befestigungsmitteln, wie Schrauben, dienen, die in zugehörige Löcher eingreifen können, die in der Gehäusewand ausgebildet sind.
